# EUROPEAN PATENT SPECIFICATION

(11) **EP 1 881 154 B1**
(45) Date of publication and mention of the grant of the patent: **25.02.2009**
(21) Application number: 07110088.7
(22) Date of filing: 12.06.2007
(51) Int. Cl.: F01D 5/00, F01D 25/00, C23C 4/10, C23C 28/00

(54) **Repair process for coated articles**
Reparaturverfahren für beschichtete Artikel
Processus de réparation pour articles recouverts

(30) Priority: 17.07.2006 US 487825; 17.07.2006 US 487901
(43) Date of publication of application: 23.01.2008
(73) Proprietor: GENERAL ELECTRIC COMPANY, Schenectady, NY 12345 (US)
(72) Inventor: Bucci, David, Simpsonville, SC 29681 (US); Miglietti, Warren Martin, Greenville, SC 29609 (US); Arnett, Michael Douglas, Simpsonville, SC 29681 (US)
(74) Representative: Szary, Anne Catherine

(56) References cited:
- EP-A- 1 217 090
- EP-A- 1 471 043
- US-A1- 2003 194 323
- US-A1- 2004 142 112

## Description

### BACKGROUND OF THE INVENTION

The present disclosure generally relates to a process for repairing damaged portions of coated metal components. More particularly, it relates to a process for repairing damaged portions of coatings on turbine engine components.

Metal components are used in a wide variety of industrial applications, under a diverse set of operating conditions. In many cases, the components are provided with coatings, which impart various characteristics, such as corrosion resistance, heat resistance, oxidation resistance, and/or wear resistance. As an example, the various components of turbine engines, which typically can withstand in-service temperatures of about 1100 degrees Celsius (° C) to about 1150° C, are often coated with thermal barrier coatings (TBC's) to effectively increase the temperature at which they can operate. Frequently, the TBC is applied to an intervening bond coating (sometimes referred to as a "bond layer", "bond coat", or "bond coat layer"), which has been applied directly to the surface of the metal turbine component to improve the adhesion between the metal and the TBC.

As a result of operating in such environments, exposed portions of the turbine components are subject to degradation. Various forms of degradation may include, but are not limited to, spallation, oxidation effects, crack formation, erosion, and wear, such as on the airfoil and sidewall surfaces of the turbine component. When such a protective coating becomes worn or damaged, it must be carefully repaired, since direct exposure of the underlying substrate to excessive temperature may eventually cause the component to fail and adversely affect various parts of the engine.

It is possible for the protective coating to be repaired several times during the lifetime of the component. In many situations, only certain portions (i.e., "local areas") of the protective coating require repair, while the remainder of the coating remains intact. However, locally repairing a coating with a patch, particularly a TBC, remains difficult. Current local repair processes, such as localized thermal spray of a coating - as disclosed for example in EP-A-1 217 090 over the damaged portion of the turbine component, suffer from drawbacks. For example, overspray around an edge of the portion to be filled in can occur, robotic arms have limited line-of-sight and may not be able to access certain areas, the seam between the original coating and the repair patch can be difficult to mate, components with complex geometries (e.g., airfoils, buckets, and shrouds) are difficult to coat properly, and/or the spray time and costs can be lengthy and expensive.

Accordingly, there remains a need in the art for improved methods of repairing and restoring damaged portions of coated metal components such as those found in turbine engines.

### BRIEF DESCRIPTION OF THE INVENTION

A process for repairing a damaged portion of a thermal barrier coating on a turbine engine component, includes sintering a mixture comprising particles of a bond coat and particles of a brazing alloy to form a composite preform; depositing a thermal barrier coating on the composite preform; contacting the composite preform with the deposited thermal barrier coating with an uncoated surface of the damaged portion of the turbine engine component; and heating the composite preform with the deposited thermal barrier coating to a temperature effective to form a brazed joint between the composite preform and the uncoated surface of the damaged portion of the turbine engine component.

Another process for repairing a damaged portion of a thermal barrier coating on a turbine engine component includes sintering a mixture comprising particles of a brazing alloy and particles of MCrAlY, wherein M is selected from the group consisting of Fe, Co, Ni, and combinations thereof, to form a composite preform; thermal spraying a thermal barrier coating on the composite preform; contacting the composite preform with the thermal sprayed thermal barrier coating with an uncoated surface of the damaged portion of the turbine engine component; and heating the composite preform with the thermal sprayed thermal barrier coating in a vacuum furnace to a temperature effective to form a brazed joint between the composite preform and the uncoated surface of the damaged portion of the turbine engine component, wherein the brazed joint is greater than or equal to about 93 percent dense.

The above described and other features are exemplified by the following figures and detailed description.

### BRIEF DESCRIPTION OF THE DRAWINGS

Referring now to the figures, which are exemplary embodiments and wherein like elements are numbered alike:
Figure 1 is a process flow chart for repairing a damaged portion of a coated metal component;
Figure 2 is a schematic representation of a cross section of a coated turbine component, wherein the coating includes a damaged portion; and
Figure 3 is a schematic representation of a cross section of a coated composite preform.

### DETAILED DESCRIPTION OF THE INVENTION

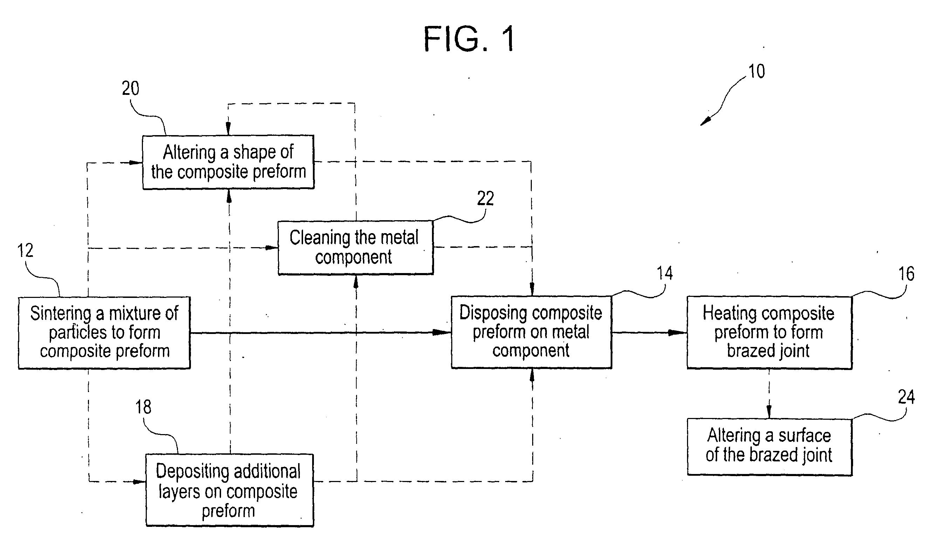

Disclosed herein are processes for repairing damaged portions of coatings on metal components. The damage to the coating can be in the form of spallation, oxidation, cracks, erosion, and/or wear. Referring now to Figure 1, an exemplary process flow is shown and generally designated by reference numeral 10. The process 10 generally includes sintering a mixture comprising particles of a brazing alloy and particles of the coating composition to form a composite preform 12; disposing the composite preform onto an uncoated (from damage) surface of the metal component 14; and heating the metal component and/or the preform to a temperature effective to form a brazed joint between the preform and the metal component 16. Advantageously, the processes disclosed herein can significantly reduce repair cycle times and costs while providing coating integrity and reliability to the coated metal component. In another advantageous feature of the disclosed processes, the seam between the brazed preform and the existing coating can be free of any gaps. Moreover, the disclosed process can enable longer periods of time between complete overhaul of the protective coating and/or the coated metal component.

The term "metal", when used in reference to the component onto which the coating is disposed, is intended to encompass metals as well as alloys. The term "preform" is used herein for convenience without any implications regarding its size or shape. Also, it should be understood that if the metal component has a multi-layer coating disposed thereupon, the "coating composition" from which particles thereof are used to make the preform refers to the coating disposed directly onto the surface of the metal component.

In an exemplary embodiment, the metal component is a turbine engine component. The form of the turbine engine component can vary among a combustor liner, combustor dome, shroud, bucket or blade, nozzle, vane, or the like. The term "blade" and "bucket" can be used interchangeably; generally a blade is a rotating airfoil of an aircraft turbine engine, and a bucket is a rotating airfoil of a land-based power generation turbine engine. In the case of a blade or bucket, the region under repair is often the tip region that is subject to wear owing to rubbing contact with a surrounding shroud, and to oxidation in the high-temperature environment. In the case of a nozzle or vane, the area under repair is often the leading edge, which is subject to wear owing to exposure to the highest velocity gases in the engine at elevated temperature.

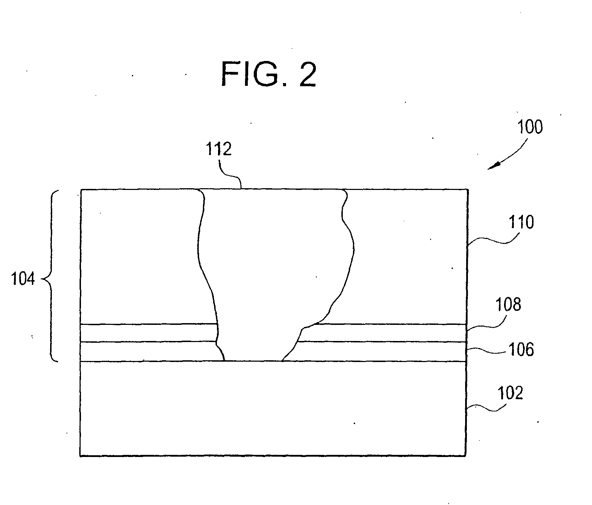

Referring now to Figure 2, there is illustrated a cross section of a portion of a coated turbine component, generally designated by reference numeral 100. The coated turbine component 100 is formed by depositing a multi-layered coating 104 onto a surface of a bare metal turbine component 102. The multi-layered coating 104 includes a bond coat 106, which is directly disposed on the surface of the metal turbine component 102, and a thermal barrier coating (TBC) layer 110 disposed thereupon.

The bare metal turbine component 102 comprises a superalloy. Superalloys are metallic alloys that can be used at high temperatures, often in excess of about 0.7 of the absolute melting temperature. Any Fe-, Co-, or Ni-based superalloy composition may be used to form the structural component. The most common solutes in Fe-, Co-, or Ni-based superalloys are aluminum and/or titanium. Generally, the aluminum and/or titanium concentrations are low (e.g., less than or equal to about 15 weight percent (wt %) each). Other optional components of Fe-, Co-, or Ni-based superalloys include chromium, molybdenum, cobalt (in Fe- or Ni-based superalloys), tungsten, nickel (in Fe- or Co-based superalloys), rhenium, iron (in Co- or Ni-based superalloys), tantalum, vanadium, hafnium, columbium, ruthenium, zirconium, boron, and carbon, each of which may independently be present in an amount of less than or equal to about 15 wt%.

The bond coat 106 is generally in the form of an overlay that serves to protect the underlying metal turbine component 102 from oxidation and enables the TBC layer 20 to more effectively adhere to the metal turbine component 102. In one exemplary embodiment, the bond coat has the composition MCrA1Y, where "M" can be Fe, Co, Ni or a combination thereof. Generally, an alloy of this type has a broad composition of about 17 wt % to about 23 wt % Cr; about 4 wt % to about 13 wt % Al; and about 0.1 wt % to about 2 wt % Y; with M constituting the balance. An exemplary combination for M is Ni and Co, wherein the ratio of Ni:Co is about 10:90 to about 90:10, by weight. Alternatively, an aluminide alloy, such as NiAl is used as the bond coat 106. An exemplary aluminide is Pt-modified NiAl, having the formula Ni₁₋ₓPtₓAl, wherein x is greater than zero and less than one.

The TBC layer 110, which is deposited on the surface of the bond coat 106, is generally a ceramic material. An exemplary material for the TBC layer 110 is yttria-stabilized zirconia (YSZ), with a preferred composition being about 4 to 8 wt % yttria, although other ceramic materials may be utilized, such as yttria, non-stabilized zirconia, or zirconia stabilized by magnesia (MgO), ceria (CeO₂), scandia (SC₂O₃) and/or other oxides. The TBC layer 110 is deposited to a thickness that is sufficient to provide the required thermal protection for the metal turbine component 102.

In an operating turbine, the coated turbine component 100 is subjected to hot combustion gases. During this exposure to high temperatures, an outer portion of the bond coat 106 can form an oxide layer 108, such as alumina (Al₂O₃), that facilitates adhesion between the TBC layer 110 and the bond coat 106. Unfortunately, also during this exposure to the hot combustion gases, the coated turbine component 100 is vulnerable to the types of damage mentioned above. One such damaged portion of coated turbine component 100 is shown in Figure 2 (represented by reference numeral 112).

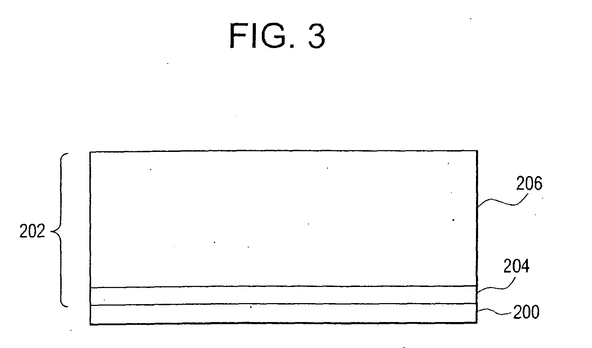

In the repair process 100, once the damaged portion 112 is identified, the composite preform can be disposed on an uncoated surface of the metal turbine component 102 in the damaged portion 112. The composite preform, which is illustrated in Figure 3 and generally designated by reference numeral 200, is made by sintering a mixture comprising particles of a brazing alloy and particles of the coating composition. In the embodiment shown in Figure 2, the coating composition is that of the bond coat 106 (i.e., MCrAlY or, alternatively, an aluminide).

The choice of brazing alloy for fabricating the composite preform 200 will depend on the composition of the metal turbine component 102 to which it will be joined. The brazing alloy composition will generally be similar in composition to the metal turbine component 102, but will also comprise a melting point suppressant or suppressants, such as boron, silicon, phosphorus, palladium, gold, zirconium, and hafnium. The brazing alloy composition is desirably chosen to melt at a lower temperature than the metal turbine component 102. The brazing alloy, upon melting, preferably wets the surface of the metal turbine component 102 and fills any voids and interstices in the damaged portion 112 as well as flows into the interface formed between the preform 200 and the metal turbine component 102. Specific brazing alloys can be readily selected by those skilled in the art in view of this disclosure.

The ratio of the particles of the brazing alloy to the particles of the coating composition in the mixture is chosen such that a solid joint is formed while also providing a sufficient bond coat 106 to protect the underlying metal turbine component 102 from oxidation and enable the TBC layer 110 to properly adhere to the metal turbine component 102. Generally, decreasing the concentration of the brazing alloy particles will provide a stronger bond coat 106, but will require a higher brazing temperature to create the joint. In contrast, increasing the concentration of the brazing alloy particles will result in increased flow of the brazing alloy resulting in a better joint, but will provide a weaker bond coat 106. Accordingly, in an exemplary embodiment, the specific ratio of brazing alloy particles to bond coat particles is about 1: :10 to about 10:1 1 by weight. Specifically, the ratio of brazing alloy particles to bond coat particles is about 1:8 to about 8:1 by weight. More specifically, the ratio of brazing alloy particles to bond coat particles is about 1:4 to about 4:1 by weight.

The temperature at which the mixture of particles is sintered should be sufficiently high enough such that grain growth occurs, but also low enough that flowing of the brazing alloy and/or alloying between the brazing alloy and the bond coat composition does not occur. The sintering temperature will be more dependent on the composition of the brazing alloy than on the bond coat composition.

Once the composite preform 200 has been prepared, additional coating layers 202 can optionally be disposed on the surface of the composite preform 200. This optional step is generally indicated in the process flow chart of Figure 1 by reference numeral 18. For example, a TBC layer 206, having the same composition as the TBC layer 110 of the metal turbine component 102 can be deposited on the composite preform 200. In addition, an oxide layer 204, having the same composition as the oxide layer 108 of the metal turbine component 102, can be deposited on the composite preform 200 to facilitate adhesion between the TBC layer 206 and the composite preform 200. Each of the additional coating layers 202 are deposited to a thickness that is substantially the same as the corresponding layer on the metal turbine component 102.

The TBC layer 206 can be deposited on the composite preform 200 using a thermal spray technique. The family of thermal spray processes includes high velocity oxy-fuel deposition (HVOF) and its variants (e.g., high velocity air-fuel), plasma spray, flame spray, and electric wire arc spray. In most thermal coating processes a material (i.e., the TBC composition) in powder, wire, or rod form is heated to near or somewhat above its melting point such that droplets of the material are accelerated in a gas stream. The droplets are directed against the surface of a substrate (i.e., the composite preform 200) to be coated where they adhere and flow into thin lamellar particles called splats.

In HVOF and related coating processes, oxygen, air or another source of oxygen, is used to burn a fuel such as hydrogen, propane, propylene, acetylene, or kerosene, in a combustion chamber and the gaseous combustion products allowed to expand through a nozzle. The gas velocity may be supersonic. Powdered coating material is injected into the nozzle and heated to near or above its melting point and accelerated to a relatively high velocity, such as up to about 600 meters per second for some coating systems. The temperature and velocity of the gas stream through the nozzle, and ultimately the powder particles, can be controlled by varying the composition and flow rate of the gases or liquids into the gun. The molten particles impinge on the surface to be coated and flow into fairly densely packed splats that are well bonded to the substrate and each other.

In a plasma spray coating process a gas is partially ionized by an electric arc as it flows around a tungsten cathode and through a relatively short converging and diverging nozzle. The temperature of the plasma at its core may exceed 30,000 degrees Kelvin and the velocity of the gas may be supersonic. Coating material, usually in the form of powder, is injected into the gas plasma and is heated to near or above its melting point and accelerated to a velocity that may reach about 600 meters per second. The rate of heat transfer to the coating material and the ultimate temperature of the coating material are a function of the flow rate and composition of the gas plasma as well as the torch design and powder injection technique. The molten particles are projected against the surface to be coated forming adherent splats.

In a flame spray coating process, oxygen and a fuel such as acetylene are combusted in a torch. Powder, wire, or rod feedstock is injected into the flame where it is melted and accelerated. Particle velocities may reach about 300 meters per second. The maximum temperature of the gas and ultimately the coating material is a function of the flow rate and composition of the gases used and the torch design. Again, the molten particles are projected against the surface to be coated forming adherent splats.

In order to control the production of oxides and/or carbides in the spray as the mixture is propelled at the substrate, the spray conditions can be controlled. The spray can be controlled such that the temperature of the particles being propelled at the substrate is sufficient to soften the particles such that they adhere to the substrate and less that which causes oxidation of the coating material, with the specific temperature dependent upon the type of coating material(s) and structural enhancer(s). For example, the coating temperature can be less than or equal to about 1,500 degrees Celsius (° C). More specifically the coating temperature is less than or equal to about 1,200 ° C, and even more specifically about 750 ° C to about 1,100 ° C.

Alternatively, the TBC layer 206 can be deposited using electron beam physical vapor deposition (EB-PVD), or other like technique. In EV-PVD, the TBC layer 206 is grown by condensing a vapor of the TBC composition on the substrate (i.e., composite preform 200). The vapor of the TBC composition is obtained by irradiating a target comprising the TBC composition with an electron beam, which has sufficient energy to evaporate the irradiated portion of the target.

If necessary, a shape of the composite preform 200 can be altered, such as by cutting or machining to a desired contour and/or dimension, to better match the contour and/or dimensions of the damaged portion 112. This optional step is generally indicated in the process flow chart of Figure 1 by reference numeral 20. If the optional additional coating layers 202 are deposited onto the composite preform 200, the altering can be performed before or after deposition of the optional additional coating layers 200.

In one embodiment, prior to placing the composite preform 200 on the surface of the metal turbine component 102, the damaged portion 112 is cleaned and stripped so as to remove loose oxides and contaminants (e.g., grease, oils and soot). This optional step is generally indicated in the process flow chart of Figure 1 by reference numeral 22. The cleaning process can take many forms or combinations depending on the type of brazing process employed. For example, an alkaline cleaning, acid cleaning, gas cleaning, degreaser, combinations comprising at least one of the foregoing cleaning processes, or the like can be performed. The choice of cleaning process employed will depend on the part to be repaired and the type of brazing process desired to form the brazed joint. The cleaning process may also include light grit blasting to further remove any residue resulting from the cleaning process. Desirably, the cleaning process is performed at an elevated temperature to facilitate and increase the chemical reactions associated with the respective cleaning process used.

Once the composite preform 200 (and optional additional coating layers 202) are placed on the uncoated or damaged portion 112, it is subjected to a brazing process to form the braze joint in the damaged portion 112. In an exemplary embodiment, the brazing process takes place in a furnace. Desirably, the furnace is equipped with vacuum and gas purging capabilities. Vacuum brazing can be carried out between about 10⁻³ and about 10⁻⁶ millibars of pressure and at a temperature greater than 300 ° C, which further helps to prevent oxidation of the metal turbine component 102. An exemplary pressure is about 10⁻⁴ millibars. A protective gas may be used during the brazing process to prevent the formation of metal oxides. For example, in high temperature vacuum furnace brazing it is preferred that an inert gas be used to help reduce the formation of metal oxides on the exposed surfaces of the metal turbine component 102.

The temperature during the brazing process can be stepwise increased for a selected period of time, and subsequently stepwise cooled to form the braze joint. It is noted that, unlike welding, brazing doesn't melt the base or parent metals of the turbine component 102. Accordingly, brazing temperatures are invariably lower than the melting points of the base metals. As described above, upon melting, the brazing alloy wets the surface of the metal turbine component 102 and fills any voids and interstices in the damaged portion 112, as well as flows into the interface formed between the composite preform and the metal turbine component 102.

In a particularly advantageous feature, the brazed joint formed between the composite preform 200 and the damaged portion 112 of the metal turbine component 102 can be free of any gaps. That is, the brazed joint can be greater than or equal to about 93 percent dense (i.e., having a porosity of less than or equal to about 7 volume percent based on the total volume of the brazed joint). In one embodiment, the brazed joint formed between the composite preform 200 and the damaged portion 112 of the metal turbine component 102 can be greater than or equal to about 96 percent dense. In another embodiment, the brazed joint formed between the composite preform 200 and the damaged portion 112 of the metal turbine component 102 can be greater than or equal to about 98 percent dense.

After the brazing process, the outer surface of the repaired, coated turbine component 100 can be altered (e.g., machined) to provide the surface with a uniform profile or contour. This optional step is generally indicated in the process flow chart of Figure 1 by reference numeral 24. Desirably, the surface is machined to the original dimension as specified for the original, undamaged, coated turbine component 100. Although optional, machining may be needed where a step height difference in the surface would be considered a defect to the turbine component. Desirably, the machining process does not unduly raise the temperature of the repaired turbine component 100.

This written description uses examples to disclose the invention, including the best mode, and also to enable any person skilled in the art to make and use the invention. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

In addition, the terms "first", "second", "bottom", "top" and the like do not denote any order or importance, but rather are used to distinguish one element from another, and the terms "the", "a", and "an" do not denote a limitation of quantity, but rather denote the presence of at least one of the referenced items. Furthermore, all ranges reciting the same quantity or physical property are inclusive of the recited endpoints and independently combinable. The modifier "about" used in connection with a quantity is inclusive of the stated value and has the meaning dictated by the context or includes at least the degree of error associated with measurement of the particular quantity.

## Claims

1. A process (10) for repairing a damaged portion (112) of a coating (104) on a metal component (102), the process (10) comprising:
sintering (12) a mixture comprising particles of a coating composition and particles of a brazing alloy to form a composite preform (200);
disposing (14) the composite preform (200) on an uncoated surface of the metal component (102); and
heating (16) the composite preform (200) to a temperature effective to form a brazed joint between the composite preform (200) and the metal component (102).

2. The process (10) of Claim 1, further comprising depositing (18) an additional layer (202) on the composite preform (200).

3. The process (10) of Claim 2, wherein depositing (18) the additional layer (202) on the composite preform (18) comprises thermal spraying the additional layer (202) on the composite preform (200) or physical vapor depositing the additional layer (202) on the composite preform (200).

4. The process (10) of any of the preceding Claims, wherein at least one of the coating and the additional layer (202) is a thermal barrier coating (206), and when the coating is a thermal barrier coating, the process further comprises the step of:
contacting (14) the composite preform (200) with the deposited thermal barrier coating (206) with an uncoated surface of the damaged portion (112) of the turbine engine component (102) and the step of heating further comprises:
forming the brazed joint between the composite preform (200) and an uncoated surface of the damaged portion (112) of the turbine engine component (102).

5. The process (10) of any of the preceding Claims, further comprising altering (20) a shape of the composite preform (200) to a specific contour or dimension prior to disposing (14) the composite preform (200) on the uncoated surface of the metal component (102).

6. The process (10) of any of the preceding Claims, further comprising cleaning (22) the damaged portion (112) effective to remove a loose oxide or contaminant prior to disposing (14) the composite preform (200) on the uncoated surface of the metal component (102).

7. The process (10) of any of the preceding Claims, further comprising altering (24) a surface of the brazed joint.

8. The process (10) of any of the preceding Claims, wherein heating (16) the composite preform (200) comprises heating (16) in a furnace, wherein the furnace can comprise a vacuum furnace.

9. The process (10) of any of the preceding Claims, wherein the metal component comprises a turbine engine component (102), the turbine engine component being selected from the group consisting of a combustor liner, a combustor dome, a shroud, a bucket, a blade, a nozzle, and a vane.

10. The process (10) of any of the preceding Claims, wherein the brazed joint formed between the composite preform (200) and the metal component (102) is greater than or equal to about 93 percent dense.

## Patentansprüche

1. Verfahren (10) zur Reparatur eines beschädigten Abschnitts (112) einer Beschichtung (104) auf einer Metallkomponente (102), bei welchem Verfahren (10) man:
eine Mischung sintert (12) umfassend Partikel einer Beschichtungszusammensetzung und Partikel eines Hartlots zur Bildung einer Komposit-Vorform (200);
die Komposit-Vorform (200) auf einer unbeschichteten Oberfläche der Metallkomponenten (102) anordnet (14); und
die Komposit-Vorform (200) auf eine zur Bildung einer hartgelöteten Verbindung zwischen der Komposit-Vorform (200) und der Metallkomponente (102) wirksame Temperatur erhitzt (16).

2. Verfahren (10) nach Anspruch 1, bei welchem man weiterhin eine zusätzliche Schicht (202) auf der Komposit-Vorform (200) abscheidet (18).

3. Verfahren (10) nach Anspruch 2, bei welchem das Abscheiden (18) der zusätzlichen Schicht (202) auf der Komposit-Vorform (18) umfasst, dass man die zusätzliche Schicht (202) auf die Komposit-Vorform (200) thermisch aufsprüht oder die zusätzliche Schicht (202) auf die Komposit-Vorform (200) aus der Dampfphase abscheidet.

4. Verfahren (10) nach einem der vorhergehenden Ansprüche, bei welchem wenigstens die Beschichtung und/oder die zusätzliche Schicht (202) eine thermische Barriereschicht (206) ist, und wenn die Beschichtung eine thermische Barriereschicht ist, das Verfahren weiterhin den Schritt umfasst, dass man:
die Komposit-Vorform (200) mit der abgeschiedenen thermischen Barriereschicht (206) mit einer unbeschichteten Oberfläche des beschädigten Abschnitts (112) der Turbinenmotorkomponente (102) in Berührung bringt und der Schritt des Erhitzens weiterhin umfasst, dass man:
die hartgelötete Verbindung zwischen der Komposit-Vorform (200) und einer unbeschichteten Oberfläche des beschädigten Abschnitts (112) der Turbinenmotorkomponente (102) bildet.

5. Verfahren (10) nach einem der vorhergehenden Ansprüche, welches weiterhin umfasst, dass man die Gestalt der Komposit-Vorform (200) auf eine spezifische Kontur oder Dimension ändert bevor man die Komposit-Vorform (200) auf der unbeschichteten Oberfläche der Metallkomponente (102) anordnet (14).

6. Verfahren (10) nach einem der vorhergehenden Ansprüche, welches weiterhin umfasst, dass man den beschädigten Abschnitt (112) reinigt (22), so dass lose Oxide oder Fremdmaterial wirksam entfernt werden, bevor man die Komposit-Vorform (200) auf der unbeschichteten Oberfläche der Metallkomponente (102) anordnet (14).

7. Verfahren (10) nach einem der vorhergehenden Ansprüche, welches weiterhin umfasst, dass man eine Oberfläche der hartgelöteten Verbindung ändert (24).

8. Verfahren (10) nach einem der vorhergehenden Ansprüche, wobei das Erhitzen (16) der Komposit-Vorform (200) umfasst, dass man in einem Ofen erhitzt (16), wobei der Ofen einen Vakuumofen aufweisen kann.

9. Verfahren (10) nach einem der vorhergehenden Ansprüche, wobei die Metallkomponente eine Turbinenmotorkomponente (102) umfasst, wobei die Turbinenmotorkomponente ausgewählt ist aus der Gruppe bestehend aus einer Brennkammerauskleidung, einer Brennkammerkuppel, einem Abdeckblech, einer Schaufel, einem Flügel, einer Düse und einer Klappe.

10. Verfahren (10) nach einem der vorhergehenden Ansprüche, wobei die hartgelötete Verbindung, die zwischen der Komposit-Vorform (200) und der Metallkomponente (102) ausgebildet ist, größer als oder gleich etwa 93 Prozent dicht ist.

## Revendications

1. Procédé (10) de réparation d'une partie endommagée (112) d'un revêtement (104) sur un composant métallique (102), le procédé (10) comprenant :
le frittage (12) d'un mélange comportant des particules d'une composition de revêtement et de particules d'un alliage de brasage afin de former une préforme composite (200) ;
la mise en place (14) de la préforme composite (200) sur une surface non revêtue du composant métallique (102) ; et
le chauffage (16) de la préforme composite (200) à une température appropriée afin de former un joint brasé entre la préforme composite (200) et le composant métallique (102).

2. Procédé (10) selon la revendication 1, comportant, en outre, le dépôt (18) d'une couche additionnelle (202) sur la préforme composite (200).

3. Procédé (10) selon la revendication 2, dans lequel le dépôt (18) d'une couche additionnelle (202) sur la préforme composite (18) comprend la pulvérisation à chaud de la couche additionnelle (202) sur la préforme composite (200) ou le dépôt physique en phase vapeur de la couche additionnelle (202) sur la préforme composite (200).

4. Procédé (10) selon l'une quelconque des revendications précédentes, dans lequel au moins l'un du revêtement et de la couche additionnelle (202) est un revêtement formant barrière thermique (206), et lorsque le revêtement est un revêtement formant barrière thermique, le procédé comprend, en outre, l'étape de:
mise en contact (14) de la préforme composite (200) comportant le revêtement formant barrière thermique (206) déposé avec une surface non revêtue de la partie endommagée (112) du composant de turbomoteur (102) et l'étape de chauffage comprend, en outre :
la formation du joint brasé entre la préforme composite (200) et une surface non revêtue de la partie endommagée (112) du composant de turbomoteur (102).

5. Procédé (10) selon l'une quelconque des revendications précédentes, comprenant, en outre, la modification (20) d'une forme de la préforme composite (200) afin d'obtenir un contour ou une dimension spécifique avant la mise en place (14) de la préforme composite (200) sur la surface non revêtue du composant métallique (102).

6. Procédé (10) selon l'une quelconque des revendications précédentes, comprenant, en outre, le nettoyage (22) de la partie endommagée (112) de manière efficace afin d'éliminer tout oxyde ou contaminant peu adhérant avant de mettre en place (14) la préforme composite (200) sur la surface non revêtue du composant métallique (102).

7. Procédé (10) selon l'une quelconque des revendications précédentes, comprenant, en outre, la modification (24) d'une surface du joint brasé.

8. Procédé (10) selon l'une quelconque des revendications précédentes, dans lequel le chauffage (16) de la préforme composite (200) comprend le chauffage (16) dans un four, dans lequel le four peut comprendre un four sous vide.

9. Procédé (10) selon l'une quelconque des revendications précédentes, dans lequel le composant métallique comprend un composant de turbomoteur (102), le composant de turbomoteur étant sélectionné dans le groupe constitué par un revêtement de chambre de combustion, un dôme de chambre de combustion, un anneau de renforcement, un auget, une ailette, une tuyère, et une aube.

10. Procédé (10) selon l'une quelconque des revendications précédentes, dans lequel le joint brasé formé entre la préforme composite (200) et le composant métallique (102) présente une densité supérieure ou égale à 93 pour-cent environ.
